**Europäisches Patentamt**

**European Patent Office**

**Office européen des brevets**

(19)

(11) Publication number: **0 067 534**

**B1**

(12) **EUROPEAN PATENT SPECIFICATION**

(45) Date of publication of patent specification: **20.11.86**

(21) Application number: **82302501.0**

(22) Date of filing: **17.05.82**

(51) Int. Cl.⁴: **G 01 D 7/10, G 01 D 18/00, G 05 D 13/00**

(54) Tolerance limitation measuring process and apparatus for optimization of technological parameters based on visual evaluation of the displayed measuring results.

(30) Priority: **19.05.81 HU 144381**

(43) Date of publication of application:
**22.12.82 Bulletin 82/51**

(45) Publication of the grant of the patent:
**20.11.86 Bulletin 86/47**

(84) Designated Contracting States:
**AT BE CH DE FR GB IT LI LU NL SE**

(56) References cited:
**FR-A- 988 222**
**FR-A-2 211 119**
**GB-A-1 230 221**

**JOURNAL OF SCIENTIFIC INSTRUMENTS,
series 2, vol. 2, no. 1, January 1969, pages
93-95, London, GB. J.P. FLEMMING "The
display of information from scanned
measuring systems by contour mapping"**

**IBM TECHNICAL DISCLOSURE BULLETIN, vol.
19, no. 6, November 1976, pages 1996-1997,
New York, USA G.W. BROCK et al.: "Cursors for
use in digital displays"**

(73) Proprietor: **Tejfalussy, András**
**Lajos utca 115**
**H-1036 Budapest (HU)**

(72) Inventor: **Tejfalussy, András**
**Lajos utca 115**
**H-1036 Budapest (HU)**

(74) Representative: **Gold, Tibor Zoltán et al**
**T.Z.GOLD & COMPANY 9, Staple Inn**
**London WC1V 7QH (GB)**

Courier Press, Leamington Spa, England.

# Description

The invention relates to tolerance limitation measuring method and apparatus suitable for optimising technological processes, whereby it can be determined under more favourable conditions than those known so far as to what tolerance range is permissible in respect of a combination of various characteristic process and condition parameters (hereinafter referred to as 'independent factors') to ensure that within a specified tolerance range certain qualitative characteristics (hereinafter referred to as 'dependent factors') of the product are obtained as a result of the process. The invention particularly relates to those technological processes which involve a plurality of technological parameters.

The invention is applicable to various combinations of technological processes, products independent factors and dependent factors generally.

However, to aid understanding, the invention is discussed by way of example only, in terms of the heat treatment process of a steel plate. In the course of said heat treatment process the relevant technological parameters are reduced to two temperature values to be maintained in two different periods. Other normal characteristic condition parameters are assumed to apply. By means of various combinations of these two different temperature values the hardness value of the end-product i.e. the steel plate and the tolerance range, $\Delta x$, for the first temperature $T_1$ at which the setting of any value of the second temperature $T_2$ within its tolerance range will definitely result in the required HB hardness value falling within the specified tolerance range are determined.

The necessity of searching for the optimum combination of a plurality of characteristic condition parameters related to a given technological process occurs frequently. Known methods of optimization involve complicated, time-consuming and labour-intensive iterative operational sequences, and consequently the achievement of adequately reliable optimization for less effort has been the subject of search for a long time. Many experiments have been conducted recently using a computer to process large amounts of data. As is well-known, however, a computer is capable only of working out answers to questions put to it and of evaluating the mass of facts strictly according to a pre-programmed relationship. For this reason calculating the optimum process condi.ions parameters from a plurality of independent factors by computer is highly input-demanding, and not sufficiently flexible. Thus the known methods of computer optimization are limited to receiving the results of measurement, conventional data handling, displaying the obtained results and evaluating the displayed results directly by an interactive computer/operator link. These interactive methods considerably reduce the sequence of interative steps and enable concentration at each step on the most probable solution among the alternative possibilities according to individual judgement. By reducing the number of iterative steps in this way not only can the input data be significantly reduced but the degree of optimization of the result obtained is better.

The known methods comprise the steps of setting the independent factors of the technological process to experimental values, then altering the settings, measuring the momentary values of the independent factors continuously, or by sample taking, measuring the dependent factor continuously, by sample taking and/or as final value processing the measured data with a microprocessor, determining values of the dependent factor corresponding to the different value combinations of the independent factors, displaying the results on a video screen, amending the process characteristics as necessary according to an individual visual evaluation of the displayed results, and repeating this operational sequence until the desired optimum result is obtained.

The visual evaluation saves many iterative steps, which would otherwise be carried out by the computer doggedly following the steps of the evaluation programme. Nothwithstanding this saving it is still true that the observed image results from the routine mechanical processing of the computer and it does not offer a basis for comparison between the variations of the interrelated tolerance ranges of the different process characteristics and the resultant variation of the dependent factor.

The method according to the invention allows elimination of this fundamental deficiency, in which the observed image does not directly display the relationship between tolerance range variations of the two independent factors and the corresponding behaviour of the dependent factor.

According to the invention, in one aspect thereof the above mentioned method of optimizing independent factors in a technological process is characterised by the steps of controlling the extent of deflection in one direction, for instance in the horizontal direction, of a beam on a television type display unit according to a dimension of a first independent factor representing a first technological parameter, and the other—e.g. vertical—direction, according to a dimension of a second independent factor representing a second technological parameter controlling the brightness and/or colour of the beam striking a screen of the display unit in accordance with the instantaneous value of a dependent factor corresponding to sampled values of the two independent factors, mechanically or electronically superimposing a plurality of level lines (e.g. in case of horizontal and vertical deflection; the corresponding directional centrelines) coinciding with the two directions of deflection on the displayed image, and determining by displacement of the level lines independently from each other the lower and upper limit values in both directions of the deflection within which for any possible combination of the independent factors, the brightness and/or colour of the image represents acceptable values of the dependent factor.

The above method describes the inventive concepts entirely in general terms, but for the sake of lucidity, the detailed explanation given below is related to specific examples with a correspondingly narrower interpretation of the concepts.

Thus, for instance, the results of measurement may be represented on the screen by diagrams shown in relation to a Descartes coordinate system, but in case of Bessel-function diagrams a polar coordinate representation is preferred and similarly it is possible to wish to represent functions in general curvilinear coordinate system. Hence although the following detailed explanations will be concerned with measurement representations in the Descartes system, in which the first independent factor controls horizontal deflection on the x-axis and the second independent factor controls vertical deflection on the y-axis, it will be understood that the same considerations will apply where in polar coordinates the first independent factor controls the magnitude of deflection of the beam and the second independent factor controls the angle of its deflection, or in the case of the general curvilinear coordinate system the first independent factor controls the first $u$ coordinate and the second independent factor controls the second $v$ coordinate.

The dynamic modulation of the beam may be controlled in a binary manner according to whether the measured value of the dependent factor is in or out of tolerance. Thus the output signal of a microprocessor may drive the brightness (or colour) control of the display unit whenever the value of the dependent factor is within the tolerance range so that the image is bright at a given spot (or of a specific colour), and the output signal of the microprocessor may drive the brightness (or colour) control of the display unit whenever the value of the dependent factor is outside the tolerance range so that the image spot remains dark (or of a normal colour). Obviously this can be achieved if the microprocessor discriminates the measured value of the dependent factor, transmitting it further within the amplitude range in a given case, not beyond the range, etc.

Alternatively, the dynamic brightness or colour modulation of the beam may be controlled by an analogue signal output from the microprocessor representing the analogue of the quantized digital form of the measured dependent factor. In this case the brightness or colouration of the resultant image has a number of values each corresponding to a different value of the measured dependent factor within the tolerance range (or even in its vicinity) and the image spot representing the result of measurement is thus coded in depth similarly to the representation of contours on a map, or different in some other way, e.g. flashing with different frequency, intensity, etc.

One of the advantages of the invention compared to the known similar solutions is, that in case of binary modulation the microprocessor is used only for data handling and for the level-dependent selection of the output signal. Mathematical evaluation of the results of measurement is not necessary, this being wholly performed by the observing intelligent human being. The advantage of not being restricted by the non-intelligent data handling device will be readily appreciated by the computer-technical expert.

The method and extent of superimposing the level lines can be selected similarly at discretion. In one embodiment one vertical and one horizontal level line are used and shifted in the course of examination of the displayed image corresponding to results of measurement to determine the lower and upper limit values separately. In an alternative embodiment two level lines are shifted in each direction, so that the tolerance range selected by way of trial is directly encompassed, which is highly expressive. Nevertheless it is conceivable that only just majoring or minoring demand may arise, when the shifting of a single level line in each direction is sufficient. The level lines may be superimposed electronically by means of a marker signal circuit. In the latter case the multiplicity of suitable off-the-shelf instruments is practically unlimited.

The division of labour between the mechanical device, observer and computer technical device may also be varied from embodiment to embodiment. When a single beam display is used, then—especially with the application of a time-division multiplex operation mode—human or computer intervention allows the projection of different patterns by the same beam with suitable time division determined by the inertia of the eye. Whereas in another form of the invention the same beam may be used to plot, with suitable time division multiplex control—i.e. at longer persistence time,—both the image and level lines. In this way several dependent factors each controlling the beam deflection in turn and corresponding to the independent factors can be plotted side-by-side on the same video screen. Moreover, in such a case where a single beam is used no special display unit is needed. The values of the independent factor may be used in turn synchronised to the traditional beam deflection of given direction, and the control mechanism of the microprocessor may be responsible for the time-correct and resultant position-correct modulation of the image spot, in which case then a conventional TV apparatus available in the trade can be used as the display unit without any special conversion.

Alternatively multi-beam display units may be used and the relationship between a number of the independent factors and deflection of given direction can be established by giving a deflection voltage proportional to each independent factor in turn to a separate one of a corresponding plurality of directional control inputs of the deflecting system. In this case the display unit is a special device, or the control signals are specially coupled, but this system has the advantage that the data control system does not require synchronization between the deflecting system and each independent factor.

In view of the foregoing, it will be appreciated that the apparatus suitable for realization of the method according to the invention has many, significantly different alternatives. At one extreme currently available building units are converted to a system with the aid of a small adapter. At the other extreme the equipment is built up from special single-purpose apparatuses according to the existing technological and economic requirements.

The apparatus according to the invention includes a microprocessor, the input devices of which are formed with data inputs adapted to the data source supplying the data relating to the characteristic condition; and product parameters of a technological process and at least one single output which is coupled to a control input of the video screen display unit. The degree of such adaptation of the data inputs required will vary however and the term 'adapted' should therefore be interpreted appropriately in very general terms. Where an adapter is available in the trade which is formed with inputs adjustable to suit different data sources, and with output signals adjustable to provide a certain input signal of the microprocessor, then the apparatus according to the invention needs no special adapter, and it is sufficient to have a data input adaptable to such adapter available in the trade. Such apparatus according to the invention is characterized in that the said control input coupled to the said signal output of the microprocessor is the brightness control and/or colour control input of the image spot, and the apparatus has an electronic or mechanical level line generator adapted to the geometry of the video screen—oriented identically with deflection directions—and a level line shifting device the motion direction of which is perpendicular to the level line and is operated with a control unit.

The level line generator referred to above may be a mechanical rule set consisting of two rules perpendicular to each other, each coupled to a movable carrier, in this case the movable carrier is arranged in front of and parallel to the video screen. The control unit may then comprise a handle or handles or functionally equivalent devices formed on appropriate parts of the rule sets.

A more versatile facility is obtained if the level line generator is electronic.

In a preferred construction the display unit has a single beam and the simultaneous display of the different diagrams is enabled by controlling the beam with the sampled outputs of each channel of a multi-channel time multiplex unit for a length of time determined by human eye-inertia. The multiplex operation mode may control modulation of the brightness (colour) and the deflecting systems of the display. It is advantageous to construct the microprocessor so that it is suitable for processing and adaptation of at least two different product characteristics, and the device of the microprocessor (hereinafter: typotron)—which transmits the electric signals adapted to the corresponding control input of the display unit and represents the momentary values of the product characteristics—is coupled through the time multiplex operating adapter to the brightness control and/or colour control inputs, said adapter is connected between the output of the typotron and corresponding signal output of the microprocessor, or between the signal output of the microprocessor and brightness control and/or colour control input. The adapter may be incorporated as an integral part of the microprocessor, or as an input circuit of the display unit, or as a non-integral part of the microprocessor or display unit, but its separate insertion between the two basic units depends on the existing application and adaptation requirements.

On the basis of above information, experts of display and computer techniques will appreciate the many variations the particular form of the two fundamental building units may take within the scope of the usual knowledge, consequently although the detailed description below is directed only at the fundamental process and to some possible constructions these are given by way of example only and without restricting the invention to these. The further description is supported by diagrams.

Figures 1 and 2 show in general the image displayed on the video screen using an apparatus or a method according to the invention and the possibility of finding the optimal tolerance range, with the difference, that Figure 1 illustrates an image representing a single dependent factor, whereas Figure 2 shows two simultaneously displayed images representing two dependent factors representing two qualitative characteristics of the same product results from variations of independent factors.

Figures 3a and 3b shown an image displaying the variation of the HB hardness value of the already mentioned steel plate with temperatures $T_1$ and $T_2$ factors.

Figure 4 shows part of display unit having a special video screen level line combination.

Figure 5 is a diagram showing the measuring instrument and the interconnection of the measuring and data collection apparatuses transmitting the data from the serviced process.

Figure 6 is a block diagram showing the formation of the electronic system given by way of example.

Figure 7 is a diagram showing the construction of the electronic units shown in detail.

Figure 8 is a block diagram showing sub-units of the XY-video converter.

Figure 9 is a functional block diagram of the data arranging unit 501 of Figure 8.

Figure 10 is a functional block diagram of units 502, 502 and 504 of Figure 8 and details of the interconnection methods of the units.

Figure 11 is an example showing the method of displaying the effect of more than two independent factors simultaneously.

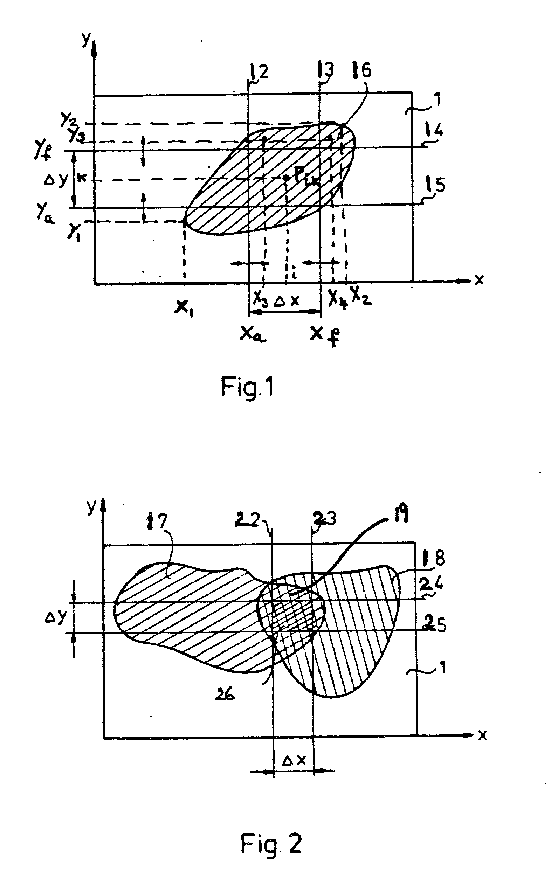

In Figure 1 a first independent factor x and a second independent factor y are shown in an orthogonal coordinate system. The explanation is valid mutatis mutandis in the case where the first independent factor and the second independent factor are shown in a polar coordinate system, or the first independent factor $u$ and second independent factor $v$ are shown in a curvilinear coordinate system. It was already mentioned that for the sake of lucidity the description was restricted to an example in which where the totality of the image spots representing dependent factor values within the tolerance range (with the same brightness or colour) contrasts the rest of the video screen, the brightness or colour of which is according to the normal condition (e.g. dark).

The image spot 16 on a screen 1 shown in Figure 1 is the geometrical position of all those image spots $P_{i,k}$ and (i and k represent the deflection values in proportion with the momentary value of the first and second independent factor respectively, as coordinate of the spot), and for which the values of the independent factors x and y result in a dependent factor value within the permissible tolerance range.

Instead of displaying proportionate numerical values expressed in a certain unit on the abscissa and ordinate, certain increasing values are provided with a serial number according to the selection. Thus the lowest y1, the ya, yf, y2 and the highest y3 value as well as the lowest x1, xa, x2, xf, x3 and the highest x4 values were projected. It is seen, that in case of setting the value x1 of the first independent factor, the value of the dependent factor will be within the permissible tolerance range only when value of the second independent factor y is appropriate to point y1; alteration of any of the independent factors x and y will result in poor quality product. On the other hand two values x3 and x4 can be ordered to value x3 in order to obtain product of acceptable quality, while only a single value i.e. x2 can be ordered to value y2 representing the local maximum. When the horizontal level lines 14 and 15 and vertical level lines 12 and 13 are shifted to points yf, ya, xa, xf, then they will encompass such two tolerance ranges $\Delta y$ and $\Delta x$, within which in case of any $y_k$ and $x_i$ value, a product of good quality can be obtained. As shown in Figure 2 if the image spots 27 and 28 representing the two different qualitative characteristics as dependent factor are simultaneously displayed on the screen 1, then overlap of the two image spots 17 and 18 will determine the range of condition characteristic parameters permissible for the product of acceptable quality. As seen, the resultant image spot 19 is shapeless, i.e. it has irregular shape. By shifting the level lines 22, 23, 24, 25 again such two tolerance ranges $\Delta y$ and $\Delta x$ are obtained, defining an area 26 within which—in case of setting any $k_k$ and $x_i$ value—a product of good quality can be reckoned with. Naturally, with consideration to the other circumstances, the person performing the evaluation may select the range minimum values within the permissible (if too high temperature is undesirable) or the range of maximum values (if temperature below the freezing point is undesirable) and due to the variability of the condition characteristic parameters, several such additional aspects may be arbitrarily considered at the setting by the evaluating person, which can be taken into account by computer only in case of feeding in a versatile system program in advance.

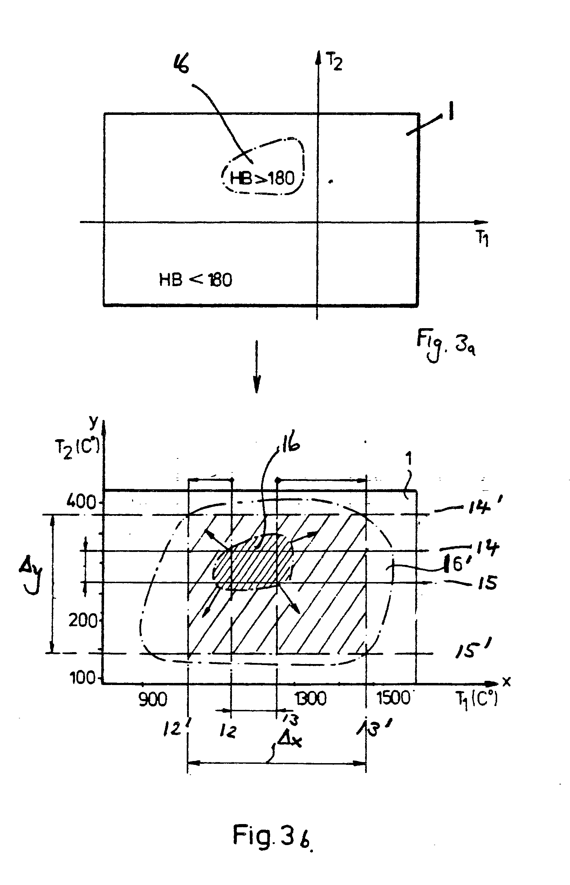

In the specific example shown in Figure 3a the screen 1 displays the effect of varying two independent temperatures $T_1$ and $T_2$ on the resulting hardness value HB of steel plate (the product). Hardness values greater than 180 are contrasted in an area 16 with the remainder of the screen which represents combinations of $T_1$ and $T_2$ for which the hardness value of the product is less than 180.

Figure 3b illustrates the effect of widening the tolerance on product hardness to show combinations of $T_1$ and $T_2$ leading to hardness values below 180 and above some other limit. It will be seen that the area of high contrast zone 16 is increased to 16' as are the tolerance ranges $\Delta x$ and $\Delta y$ within the level lines 12, 13 and 14, 15 respectively. The latter are shifted to 12', 13' and 14', 15' respectively.

Naturally the most diversified apparatus alternatives can be constructed for the described measuring process, without the need of changing the essential elements of the process. For instance the display of several independent factors or dependent factors is also possible in a simple way on the video screen side-by-side, or within each other, by adaptation of the known method (according to the principle of the matrix-space—subspace relation). Similarly the various images can be displayed in consecutive order. Sequences of the images side-by-side or following each other can be arranged according to further independent factors, giving further opportunity for expansion for the measuring possibilities, since the dimensions of the further independent factors can be directly taken into consideration. Ordering the increasing values of the independent factors to images side-by-side or following each other, and to consider the dimensions of new independent factors in sub space form at the beam deflection on representation of the dependent factor values, represent no problem. In case of displaying the images side-by-side, different (e.g. colour) level lines may be used as independent factor. The uninteresting parts can be deleted from the images by simple discriminations; in this way a clear image is obtained for measuring. The remaining images can be brought side-by-side with routine programmes, whereby the video screen can be utilized more efficiently. The microprocessor can generate level lines of matching position at the images, for which routine programme can be worked out. The rate of consecutive projection of the condition systems in the data system can be examined at a rate offering better view. Routine programmes can be used for enlargement and reduction of image details as well. The usual markings on the images during transit or in stationary image are possible with a marker device, which allows the condensation of the images showing the solution (omission of images not showing the solution). The transitional images between the images pertaining to the adjacent independent factor combination and to the given dependent factor condition system can be optimally generated with routine programming, and interpolations. Similarly known image-filtering programmes are applicable on the images, for filtering or marking faulty solutions, furthermore the summation of images, image details point-by-point with + or − signs is also possible.

Thus the utilization of traditional mathematical and computer technical elements expands almost at will the application field of the method and apparatus without restricting the invention with the variations.

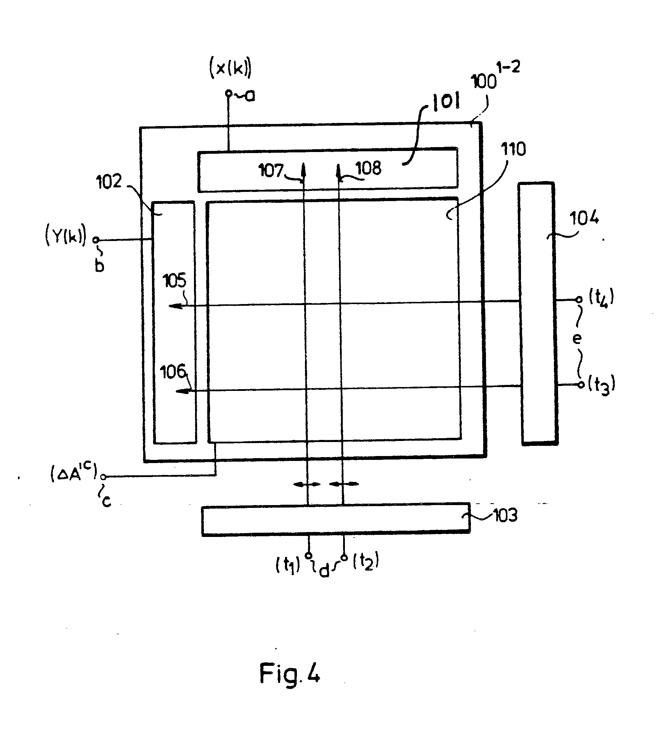

Figures 4 to 11 illustrate a specific form of the method and apparatus by way of example.

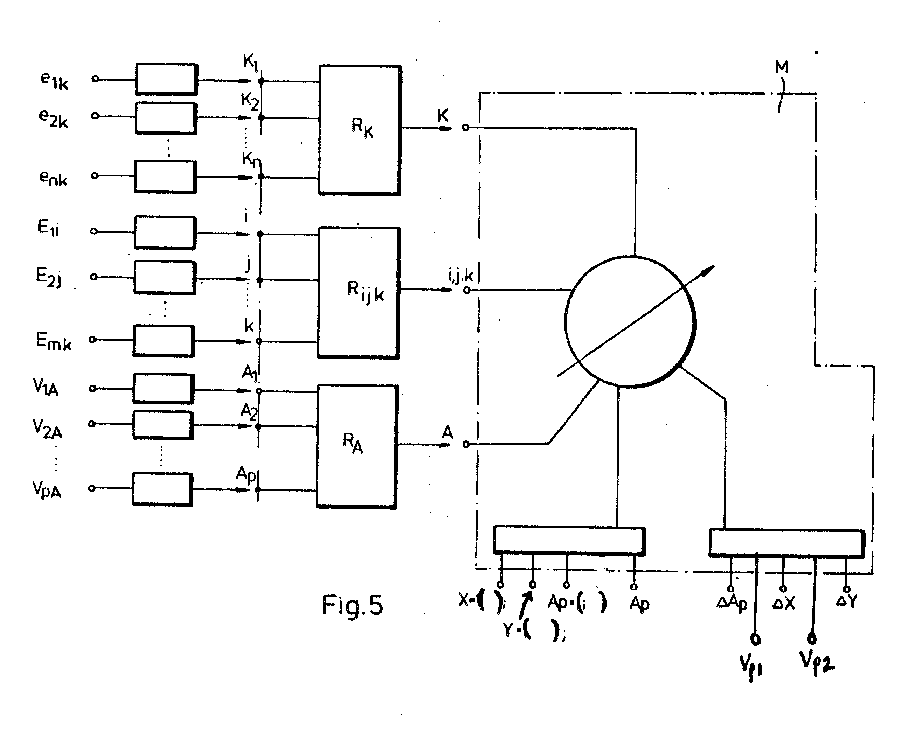

Figure 4 shows a video screen $100^{1-2}$ with level lines and their control units, as well as arrangement of the scales, display surface and level lines on the video screen in relation to each other. On the video screen $100^{1-2}$ the display surface 110 is between scale 101 and orthogonal coordinates determined by scale 102. Level lines 107 and 108 are along scale 101, level lines 105 and 106 are along scale 102. Level lines 107 and 108 can be optimally set along the scale controlled on input $a$ with the pertinent control unit 103 controlled on input $d$. Level lines 105 and 106 are coupled to control unit 104, functioning from input $e$. Display surface 110 is coupled with input $c$, its brightness, colour etc. can be controlled from there. The screen unit is connected to the other units by means of inputs a to e. The block diagram in Figure 5 shows the connection of the main units for the measuring process. The independent factors are coupled with the data collector $R_k$ at points $K_1, K_2 \ldots K_n$ with electric signals of sensors $e_{1k}, e_{2K} \ldots e_{nk}$. The sensors $E_{1i}, E_{2i} \ldots E_{nk}$ transmit the place, time, etc., identification data of the interdependence of the independent factors and dependent factors to the data collector $R_{ijk}$ connected to points ij...k. Sensors $V_{1A}, V_{2A} \ldots V_{uA}$ transmit electric signals corresponding to the momentary values and/or final values of the dependent factors of the data collector $R_A$ on points $A_1, A_2 \ldots A_p$. Data collectors $R_K, R_{ijk}, R_A$ in given case may be combined on a single microprocessor system having a multiplex operation mode which performs all these functions.

The data input of the tolerance limitation measuring apparatus M is coupled to the outputs K, ijk, A of data collectors $R_K, R_{ijk}, R_A$. The tolerance limitation measuring apparatus M has further inputs for control of the various functions. The inputs are as follows: ΔAp: dependent factor limitation control input; Δx or in case of more than two independent factors Δx .... is the independent factor limitation control input along x; Δy or in case of more than two factors Δy ... is the independent factor limitation control input along y;. In addition further inputs are used for setting the operation mode of the tolerance limitation measuring apparatus M. These are the following x=( ) for determining the x coordinate values; y=( ) for determining the y coordinate values; $A_p$=( ) for determining the coordinates of the dependent factor and independent factor; $A_p$ for determining the dependent factor (k) to be displayed; $V_{p1}$ for determining the colour and/or brightness codes for each dependent factor; $V_{p2}$ for determining the display logical function of the dependent factors.

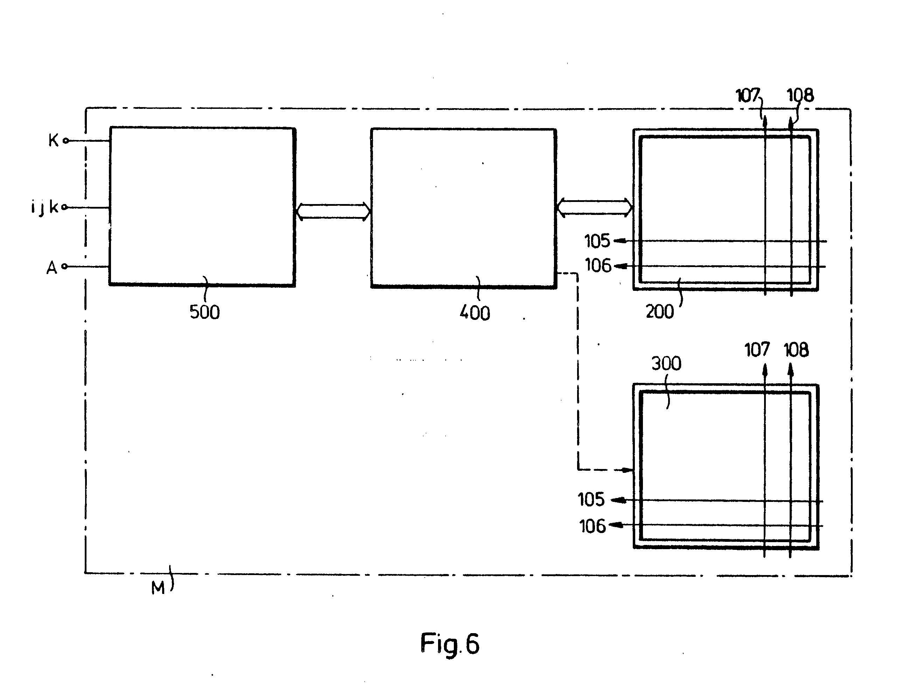

The display system shown in Figure 4 is coupled to the servicing electronics at points 'Sync'; (x)k); (Y)k); (ΔA'ᶜ); ($t_1 \ldots t_{4n}$), the realization is shown by way of example in Figure 6. Main units of the servicing electronics according to the block diagram: Colour Monitor 200; Black and White Monitor 300 B and W; Display Processor 400; XY-Video Converter 500.

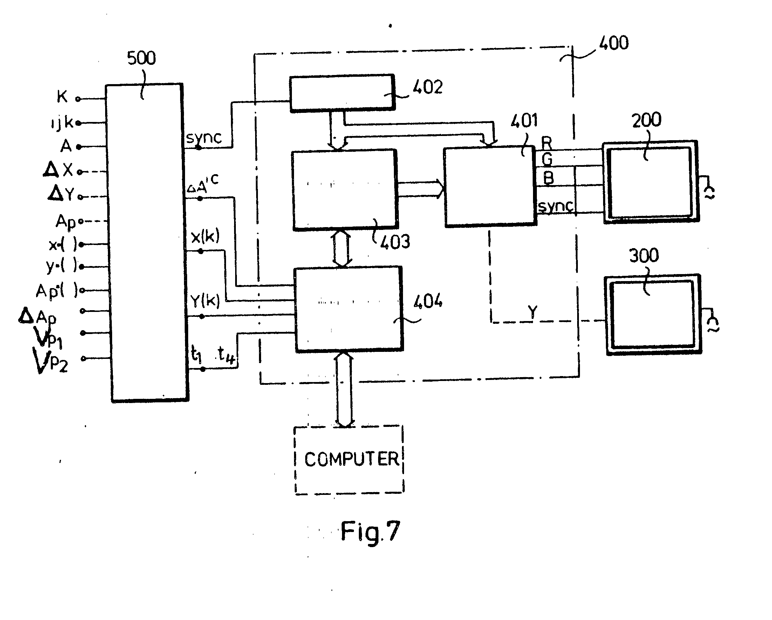

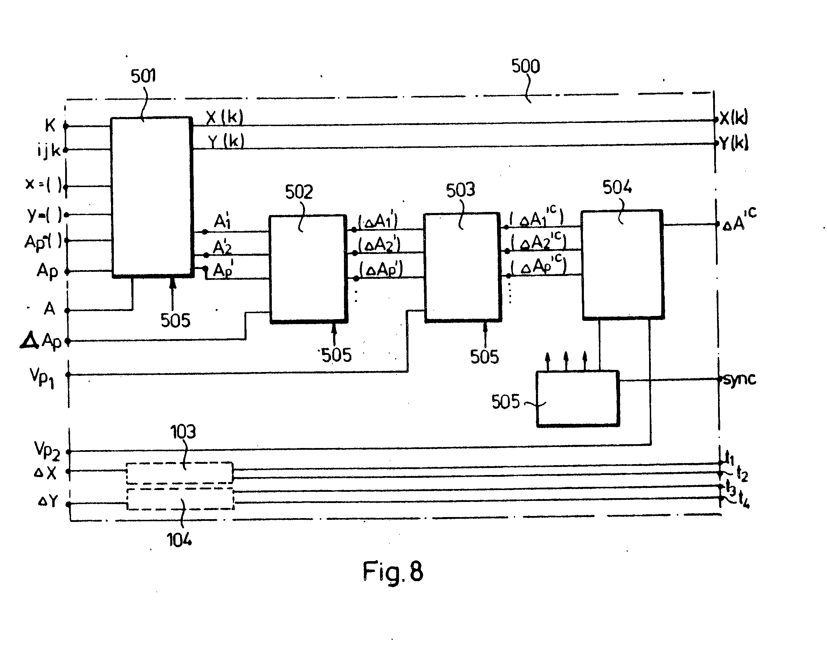

The electronics is shown in detail in Figure 7, such as Display Processor 400, Video Unit 401, Synchron-generator 402, Memory Unit 403 and Interface Unit 404; the XY-Video Converter 500 is coupled to Interface Unit 404 at points 'Sync'; A'ᶜ, $X(k), y(k), t_1 \ldots t_4$. The functions necessary for the measuring process are performed essentially by the XY-Video Converter 500, the internal build-up of which can be traced in block diagram shown in Figure 8. The XY-Video Converter consists of the following main units: data arranging unit 501, dependent factor limiter 502, brightness and/or colour code 503, dependent factor display logical circuit 504; control centre of multiplex operation mode 505; the independent factor level line setting unit (electronic level line) is necessary in given case.

Inputs of the XY-Video converter 500: K; ijk; x=( ); y=( ); $A_p$=( ); A; $A_p$; $A_p$; $V_{p1}$; and $V_{p2}$ in given case are coupled with inputs ΔX and ΔY to corresponding outputs of the data collectors and control units. Further inputs of the other units are coupled through outputs (X)k); (Y)k); ΔA'ᶜ; 'Sync' and in given case through $t_1 \ldots t_{4n}$ to the units of the XY-Video Converter 500.

Unit 501 arranges the data corresponding to inputs K and A on inputs x=( ); y=( ); $A_p$=( ) according to the operating instructions setting in the sequence or arranging into matrices the dependent factor data according to the dimensions of the independent factors. The scale control 101 is coupled to output x(k) of unit 501, while scale control 102 to output y(k) for display of the corresponding scales on video screen $100^{1-2}$. In accordance with the determinations the signals corresponding to the arranged dependent

factor values $A_1'$; $A_2'$; $A'_3$ ... are received by the dependent factor limiter unit 502, where those signals representing dependent factors falling within the limit values determined on input $\Delta A_p$ are transmitted towards the video screen, if they are within the given appropriate limit values $\Delta A_p$, but the signals are not transmitted when they fall outside the given appropriate limit values $\Delta A_p$. The brightness and colour coder is coupled to signal outputs $(\Delta A_1')$; $(\Delta A_2')$; $(\Delta A_p')$ etc., which—depending on the determination given to the input $V_{p1}$—performs brightness or colour coding of each dependent factor according to a predetermined code signal, e.g. colour code $\Delta A_1'^c$ to $\Delta A_1'$ and so on. The brightness and colour code signals $\Delta A_1'^c$; $\Delta A_2'^c$; $\Delta A_p'^c$ are transmitted to the dependent factor display logical circuit 504, which according to the determination given to input $V_{p2}$ performs selectable logical 'AND', logical 'OR', 'ADD' and 'SYNTHETIZER' functions. The brightness and/or colour signal $\Delta A'^c$ corresponding to the momentary value of the dependent factors appears on the display logical circuit output of the dependent factor 504.

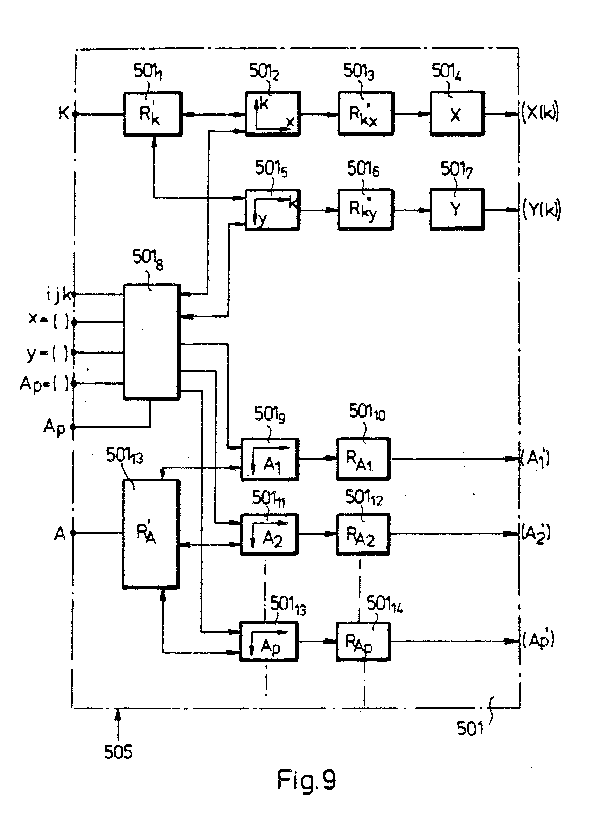

Figure 9 shows details of the data arranging unit 501. The independent factor value appearing on input K is transmitted to storage register $501_1$ $R_k'$ from where it is required by sorter unit $501_2$, in which the dimensions of data K are arranged according to dimensions x of the beam deflection based on the instructions taken from the register content $R(x,y,Ap, i,j,k,)$ of unit $501_8$. The so-arranged data are transmitted into the storage register $501_3$ $R''_{kx}$, from there to the output of deflecting unit $501_4$ X and the signal (X)k appears on control of the X-directional scale. The control signal (Y)K of the y-directional scale is formed in the same way in units $501_5$, $501_6$ and $501_7$.

The dependent factor values on input A are transmitted to the storage register $501_{13}R'_A$, from where they are requested by data sorter $501_9$ $A_1$ and/or $501_{11}A_2$ and further data sorter(s) $501_{13}$ $A_p$, which adapt the dependent factor data A to x-directional scale and y-directional scale according to the relationship taken from register content $R_{(x,y,Ap,ijk)}$ of unit $501_8$. The arranged dependent factorial data are the register contents $R_{A1}$, $R_{A2}$, $R_{Ap}$ of storage units $501_{10}$, $501_{12}$, $501_{14}$ and the corresponding data system $(A_1')$, $(A_2')$, $(A_p')$ can be taken from there for the further signal processing. Unit $501_8$ enables the ordering of the various independent and dependent factor data to each other based on their actual relationship in the technological process, i.e. to adapt them to the x-directional and y-directional scales. Instructions of the actual arrangement can be given in each case according to the purpose of the examination, and the operation mode determining the inputs A, x=( ), y=( ), $A_p=( )$ serve for this purpose, the function of which has already been detailed earlier.

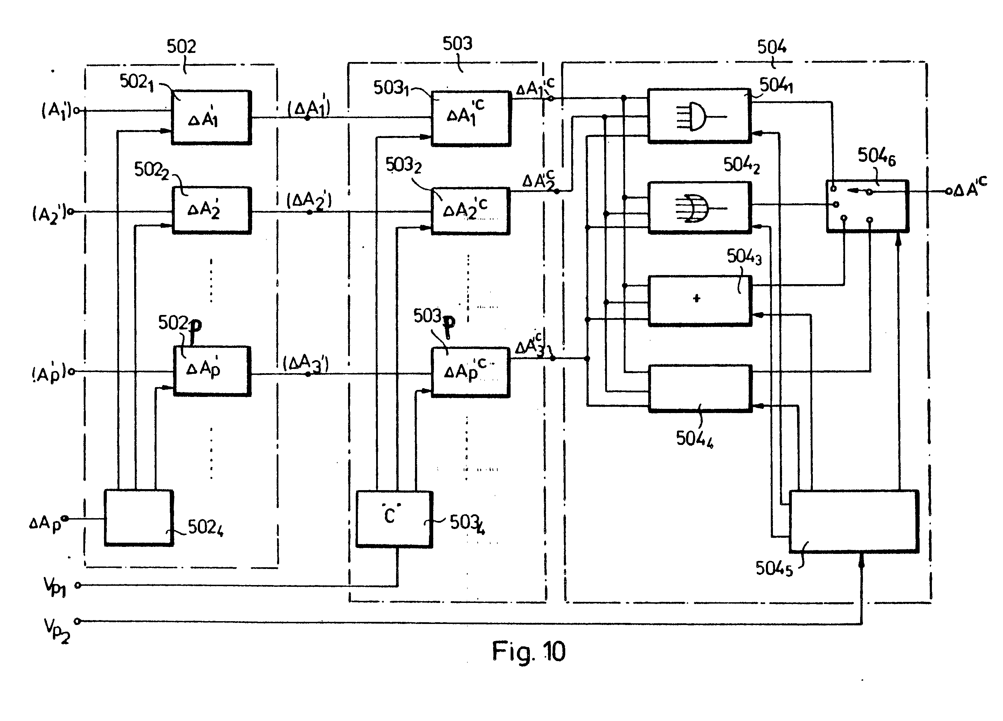

Figure 10 shows in detail the structure of units 502, 503 and 504. As seen, the unit $502_1$ performs discrimination with the assigned by-pass band $\Delta A_1$. Signal $(\Delta A_1')$ appears on its output, if its

input signal $(A_1')$ conforms to the discrimination condition. Essentially the same discrimination applies to the further dependent factors. For instance signal $(A_2')$ is discriminated by unit $502_2$, signal $(A_p')$ by unit $502_p$, etc.

The output signals $(\Delta A_1')$, $(\Delta A_2')$ ... $(A_p')$ of discriminaor units $502_1$, $502_2$ ... $502_p$ ... etc. are transmitted to brightness and/or colour coders $503_1$, $503_2$ ... $503_p$, where the brightness and colour coding is performed by the operator on the appropriate input $V_{p1}$. As a result of the codings the coded signal represents the basis of further operations. Output signals $(\Delta A_1'^c)$, $(\Delta A_2'^c)$, ... $(\Delta A_p'^c)$ drive the dependent factor display logical circuit unit 504. Discrimination stages of unit 503 are set by control unit $503_4$ 'C', which is a control circuit of multiplex operation mode, containing the usual solutions for the expert, with input $V_{p1}$ for determination of the codings.

The dependent factor display logical circuit 504 synthetizes the coded signals of the discriminators to a single brightness and/or colour signal combination $\Delta A'^c$ for driving the video circuits. For the various measuring process alternatives the logical circuit $504_1$ realizes logical 'And', the logical circuit $504_2$ realizes logical 'Or', the logical circuit $504_3$; 'addition', and the logical circuit $504_4$ realizes combined operation with circuit solutions evident from the expert. The functional setting is performed by control unit $504_5$ of multiplex operation mode in a way known by the expert, which can be set on input $V_{p2}$ by determination of the operation mode. For instance the selector switch $504_6$ is set with $504_5$, etc.

On the basis of above, the measuring is performed with apparatus M in such a way that in a technological process having a plurality of characteristic process and condition parameters the independent factors $e_{1k}$, $e_{2k}$ ... $e_{nk}$, the corresponding sampled measurement data $K_1$, $K_2$ ... $K_n$ of these independent factors are coupled to input K of the apparatus, the dependent factors $V_{1A}$, $V_{2A}$ ... $V_{uA}$ referring to one or several qualitative characteristics of the product obtained as a result of the technological process and their corresponding sampled measurement data $A_1$, $A_2$ ... $A_p$ are coupled to input A of apparatus M, furthermore the data $E_{1i}$, $E_{2j}$ ... $E_{nk}$ etc. serving for identification and correlation of data K and A, and their corresponding sampled measurement data i, j, ... k are coupled to input ijk of apparatus M. The independent factors to be displayed on scale 101 along the x directional deflection are set at operation mode input x=( ), and the independent factors to be displayed on y-directional scale 102 are set at y=( ). The dependent factors $A_p$ to be displayed on the video screen display surface (110) are given. $V_{p1}$ determines which dependent factor should be displayed with what kind of brightness or colour coding. $V_{p2}$ is used for setting which logical function should synthetize the video signal $\Delta A'^c$. Thereafter the limitation

(discrimination) conditions $\Delta A_p$ are given for the dependent factors. The images corresponding to the limitation conditions $\Delta A_p$ are displayed one after the other, and measurement of the limit values and limitation variations (tolerance limitations) of the dependent factors is performed in the visualized images on screen constructing the measuring diagrams $\Delta A_p$—$\Delta x$—$\Delta y$ with the device using the level lines.

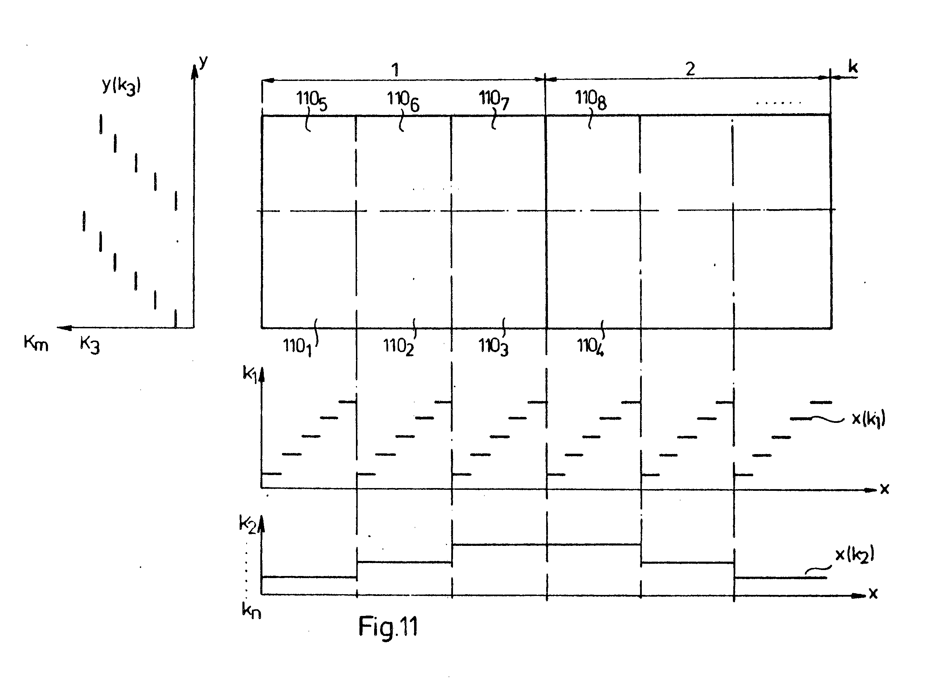

In case of more than two independent factors the described measurements are repeated. Suitably the dimension synthetizing modes are varied as shown in Figure 11. Thus all measurements can be performed with images side-by-side and/or in consecutive order according to the determined sequence with consideration to momentary and/or final value combination of all independent factors—dependent factors, while the person performing the examination is capable of evaluating the process in its total interrelation under the most diversified discrimination conditions.

Accordingly the 'space' of display 110 in Figure 11 is divided into sub-spaces $110_1$ ... $110_8$, etc., and the dependent factor momentary values in function of the independent factors $K_1$—$K_3$ are displayed side-by-side and/or in consecutive order according to the values of the further independent factors $K_2$ etc.

**Claims**

1. A method for determination, in relation to technological processes which involve a plurality of technological parameters, as to what tolerance range is permissible in respect to a combination of various characteristic process and condition parameters (hereinafter referred to as 'independent factors') to ensure that within a specified tolerance range one, or several qualitative characteristics (hereinafter referred to as 'dependent factors') of the product are obtained as a result of the process, including the steps of setting the independent factors to experimental values, changing the setting, measuring the instantaneous values of the independent factors and the dependent factor(s) by sample taking, and/or as final values, processing the measuring data with a microprocessor to determine the dependent factor values corresponding to the various value-combinations of the independent factors, displaying the result on a video screen of a television type display unit modifying the process characteristics according to a visual evaluation of the displayed image and repeating this process until the desired final result is obtained, characterized in that the method includes the further steps of controlling the extent of deflection of a beam of the display unit according to a dimension of an independent factor representing at least one technological parameter in one—e.g. horizontal—direction and according to a dimension of an independent factor representing at least one further technological parameter in another—e.g. vertical—direction, controlling the brightness and/or colour of the beam striking the video screen in accordance with the instantaneous value of a dependent factor corresponding to sample values of the independent factors, mechanically or electronically superimposing a plurality of level lines identically oriented with the two deflection directions (e.g. in case of horizontal and vertical directional deflection: centre lines of corresponding direction) on the displayed image, and shifting the position of the level lines independently from each other to determine the lower and upper limit values ($x_a$—$x_f$ and/or $y_a$—$y_f$) in both directions, within which, for any possible combination of the independent factors, the brightness and/or colour of the image represents acceptable values of the dependent factor.

2. A method as claimed in claim 1, characterized in that at least two level lines are superimposed on the displayed image in each direction, the level lines are shifted so as to encompass the experimentally set tolerance range ($\Delta x$ and $\Delta y$) at the position of the momentary lower and upper limit values ($x_a$—$x_f$, and $y_a$—$y_f$) in the existing direction.

3. A method as claimed in claim 1 or 2, characterized in that in the deflecting system of the display apparatus one or the other directional deflection is controlled directly with an electric signal proportional to the momentary value of the corresponding independent factor.

4. Apparatus for the determination of optimal tolerance ranges based on visual joint evaluation of technological process parameters and product characteristics including microprocessor means, the input devices of which are formed with data inputs (Rk, Rijk, RA) adapted to data sources (V1A, V2A ... VpA) ($e_{1k}$, $e_{2k}$ ... $e_{nk}$) supplying said technological parameters and product characteristics, and at least one of its signal outputs ($\Delta A'c$) is coupled to a control input (c) of the video screen display unit (110), characterized in that this control input (c) is the brightness and/or colour control input of the image spot and the apparatus has electronic or mechanical level line generators adapted to the geometry of the screen image—oriented identically with the deflection directions—as well as a control device operated level line shifting device (103, 104) the direction of movement of which is perpendicular to the level line.

5. Apparatus as claimed in claim 4, characterized in that at least further two signal outputs (XK, YK) of the microprocessor are coupled directly or indirectly to the input (a, b) controlling one or the other directional deflection of the deflecting system of the display unit (110).

6. Apparatus as claimed in claim 4 or 5, characterized in that the level line generator is a rule set consisting of at least two rules, each coupled to at least one movable carrier, the movable carrier is arranged parallel with and in front of the video screen, and the control device is a handle formed on the rule set, or a functionally equivalent device.

7. Apparatus as claimed in claim 4 or 5, characterized in that it has a multi-beam display unit in which the control unit of one of the beams is brightness and/or colour control input coupled with one of the signal inputs of the microprocessor, while one or several further beam brightness control device(s) is/are manually operated devices and further manually operated devices are coupled to units controlling the deflection of further beams in one or the other direction.

8. Apparatus as claimed in claim 7, characterized in that it is formed with a further beam, where manual operating devices in different time division are coupled to each deflection control device of the apparatus.

9. Apparatus as claimed in any of claims 4—8, characterized in that the microprocessor is formed and adapted for the processing of at least two different product characteristics, and the device of the microprocessor (hereinafter typotron) which supplies the electric signal(s) adapted to the corresponding control input of the display unit representing the momentary values of these product characteristics is coupled through the time multiplex adapter to the brightness and/or colour control input(s) of the display unit, said adapter is connected between the output of the typotron and corresponding signal output of the microprocessor, or between the corresponding signal output of the microprocessor and the brightness and/or colour control input.

**Patentansprüche**

1. Verfahren zur Bestimmung bei einem technologischen Prozeß, der einer Mehrzahl von technologischen Parametern unterliegt, welcher Toleranzbereich in Bezug auf eine Kombination verschiedener charakteristischer Prozeß- und Zustandparameter (im weiteren "unhbängige Faktoren") zugelassen ist, um sicherzustellen, daß innerhalb eines speziellen Toleranzbereiches eine oder mehrere Qualitätseigenschaften (im weiteren "abhängige Faktoren") des Produktes als Ergebnis des Prozesses erhalten werden, mit den Verfahrensschritten des Einstellens der unabhängigen Faktoren als experimentelle Werte, des Änderns der Einstellungen, des Messens der Augenblickswerte der unabhängigen Faktoren und jedes abhängigen Faktors durch Probenahme und/oder als Endwerte, des Verarbeitens der Meßdaten mit einem Mikroprozessor zur Bestimmung der Werte des abhängigen Faktors in Abhängigkeit von verschiedenen Wertekombinationen der unabhängigen Faktoren, des Anzeigens des Ergebnisses auf dem Bildshirm einer Bildschirm-Anzeigeeinheit, des Modifizierens der Prozeßeigenschaften aufgrund einer visuellen Auswertung des angezeigten Bildes und des Wiederholens dieses Vorganges, bis das gewünschte Endergebnis erhalten wird, dadurch gekennzeichnet, daß als weitere Verfahrensschritte das Ausmaß der Ablenkung eines Strahls der Anzeigeeinheit entsprechend eines Wertes eines unabhängigen Faktors, der wenigstens einen technologischen Parameter repräsentiert, in einer—z.B. horizontalen-Richtung und entsprechend eines Wertes eines unabhängigen Faktors, der wenigstens einen weiteren technologischen Parameter repräsentiert, in einer anderen—z.B. vertikalen—Richtung gesteuert wird, die Helligkeit und/oder Farbe des auf den Bildschirm auftreffenden Strahls entsprechend des Augenblickswertes eines abhängigen Faktors aufgrund Muster-Werten der unabhängigen Faktoren gesteuert wird, mechanische oder elektronisch eine Mehrzahl von Niveaulinien, die zu den beiden Ablenkrichtungen identisch ausgerichtet sind (z.B. im Falle der Ablenkung in vertikaler und horizontaler Richtung: Zentrierlinien der entsprechenden Richtung) dem angezeigten Bild überlagert werden und die Niveaulinien in ihrer Position unabhängig voneinander verlagert werden, um in beiden Richtungen die unteren und oberen Grenzwerte $(x_a-x_f)$ und/oder $y_a-y_f$) zu bestimmen, in denen für irgendeine mögliche Kombination der unabhängigen Faktoren die Helligkeit und/oder Farbe des Bildes annehmbare Werte abhängigen Faktors darstellt.

2. Verfahren nach Anspruch 1, dadurch gekennzeichnet, daß wenigstens zwei Niveaulinien dem angezeigten Bild in jeder Richtung überlagert werden und die Niveaulinien so verlagert werden, daß sie den experimentell gesetzten Toleranzbereich ($\Delta x$ und $\Delta y$) an den Stellen der momentanen unteren und oberen Grenzwerte ($x_a-x_f$ und $y_a-y_f$) in der jeweiligen Richtung einschließen.

3. Verfahren nach Anspruch 1 und 2, dadurch gekennzeichnet, daß das Ablenksystem der Anzeigevorrichtung für die eine oder andere Richtungsablenkung direkt von einem elektrischen Signal gesteuert wird, welches proportional zu dem momentanen Wert des entsprechenden unabhängigen Faktors ist.

4. Vorrichtung zur Bestimmung optimaler Toleranzbereiche aufgrund visueller gemeinsamer Auswertung von technologischen Prozeßparametern und Produkteigenschaften, mit einem Mikroprozessor, dessen Eingangsvorrichtung mit Dateneigengängen (Rk, Rijk, RA) versehen sind, die an Datenquellen (V1A, V2A . . . VpA) ($e_{1k}$, $e_{2k}$ . . . $e_{nk}$), von denen die technologischen Parameter und Produkteigenschaften geliefert werden, angepaßt sind und von dessen Signalausgängen ($\Delta A'c$) wenigstens einer an einen Steuereingang (c) der Bildschirmanzeigeeinheit (110) gekoppelt ist, dadurch gekennzeichnet, daß dieser Steuereingang (c) der Helligkeits- und/oder Farbsteuereingang des Bildflecks ist und die Vorrichtung elektronische oder mechanische Generatoren zur Erzeugung von Niveaulinien, die an die Geometrie des Bildschirmes-identisch mit den Ablenkrichtungen ausgerichtet—angepaßt sind, und eine über eine Steuereinrichtung betriebene Niveaulinien-Verlagerungsvorrichtung (103, 104) aufweist, deren Bewegungsrichtung senkrecht zu der Niveaulinie ist.

5. Vorrichtung nach Anspruch 4, dadurch gekennzeichnet, daß wenigstens zwei weitere Signalausgänge (XK, YK) des Mikroprozessors direkt oder indirekt mit dem die eine oder die andere Richtungsablenkung des Ablenksystems der Anzeigeeinheit (110) steuernden Eingang (a, b) gekoppelt sind.

6. Vorrichtung nach Anspruch 4 oder 5, dadurch gekennzeichnet, daß der Niveauliniengenerator ein Linealsatz aus wenigstens zwei Linealen ist, von denen jedes mit wenigstens einem bewegbaren Träger gekuppelt ist, der vor dem Bildschirm parallel zu diesem angeordnet ist, und daß die Steuervorrichtung ein auf dem Linealsatz ausgebildete Handgriff oder ein funktionell äquivalente Vorrichtung ist.

7. Vorrichtung nach Anspruch 4 oder 5, dadurch gekennzeichnet, daß sie eine Mehrfachstrahl-Anzeigeeinheit aufweist, in welcher die Steuereinheit eines der Strahlen ein Helligkeitsund/oder Farbsteuereingang ist, der mit einem der Signaleingänge des Mikroprozessors gekoppelt ist, wobei eine oder mehrere weitere Strahl-Helligkeitssteuervorrichtungen manuell betätigte Vorrichtungen sind und weitere manuell betätigte Vorrichtungen mit Einheiten gekuppelt sind, von denen die Ablenkung der zusätzlichen Strahlen in der einen oder der anderen Richtung gesteuert wird.

8. Vorrichtung nach Anspruch 7, dadurch gekennzeichnet, daß sie mit einem weiteren Strahl versehen ist, wobei manuelle Betätigungsvorrichtungen mit unterschiedlicher Zeitteilung mit jeder Ablenkungssteuervorrichtung der Vorrichtung gekuppelt sind.

9. Vorrichtung einem der Ansprüche 4 bis 8, dadurch gekennzeichnet, daß der Mikroprozessor zur Verarbeitung wenigstens zweier unterschiedlicher Produkteigenschaften ausgelegt ist und die Vorrichtung des Mikroprozessors (im weiteren "Typotron"), welche die elektrischen Signale liefert, die an die entsprechenden Steuereingänge der Anzeigeeinheit angepaßt sind und die momentanen Werte dieser Produkteigenschaften repräsentieren, über den Zeitmultiplexadapter an den Helligkeits- und/oder Farbsteuereingang der Anzeigeeinheit angeschlossen ist, wobei der Adapter zwischen den Ausgang des Typotrons und den entsprechenden Signalausgang des Mikroprozessors, oder zwischen den entsprechenden Signalausgang des Mikroprozessors und den Helligkeits- und/oder Farbsteuereingang eingeschaltet ist.

**Revendications**

1. Procéde pour la détermination, en relation avec des processus technologiques qui font intervenir une pluralité de paramètres technologiques, de la gamme de tolérances qui est admissible en ce qui concerne une combinaison de différents paramètres caractéristiques de processus et de conditions (appelés dans la suite des "facteurs indépendants") pour faire en sorte que, dans une gamme de tolérances spécifiée, une ou plusieurs caractéristiques qualitatives (appelées dans la suite des "facteurs dépendants") du produit soient obtenues en résultat du processus, comprenant les étapes consistant à régler les facteurs indépendants à des valeurs expérimentales, à changer le réglage, à mesurer les valeurs instantanées des facteurs indépendants et des facteurs dépendants en prélevant des échantillons, et/ou des valeurs finales, à traiter les données de mesure avec un microprocesseur pour déterminer des valeurs des facteurs dépendants correspondant au différentes combinaisons de valeurs des facteurs indépendants, à afficher le résultat sur un écran vidéo d'une unité d'affichage du type télévision, à modifier les caractéristiques de processus en concordance avec une évaluation visuelle de l'image affichée et à répéter ce processus jusqu'à ce que le résultat final désiré soit obtenu, caractérisé en ce que le procédé comprend en outre les étapes consistant à commander le degré de déviation d'un faisceau de l'unité d'affichage en concordance avec une dimension d'un facteur indépendant représentant au moins un paramètre technologique dans une direction—par exemple horizontale—et en concordance avec une dimension d'un facteur indépendant représentant au moins un autre paramètre technologique dans une autre direction—par exemple vertical—, à commander la brillance et/ou la couleur du faisceau arrivant sur l'écran vidéo en concordance avec la valeur instantanée d'un facteur. dépendant correspondant à des valeurs échantillonnées des facteurs indépendants, à superposer mécaniquement ou électroniquement une pluralité de lignes de niveau orientées de façon identiques dans les deux directions de déviation (par exemple dans le cas d'une déviation dans une direction horizontale et dans une direction verticale: des lignes centrales de directions correspondantes) sur l'image affichée, et à déplacer la position des lignes de niveaux indépendamment l'une de l'autre pour déterminer les valeurs limites inférieure et supérieure $(x_a—x_f$ et/ou $y_a—y_f)$ dans les deux directions, entre lesquelles, pour toute combinaison possible des facteurs indépendants, la brillance et/ou la couleur de l'image représente des valeurs acceptables du facteur dépendant.

2. Procédé tel que revendiqué dans la revendication 1, caractérisé en ce qu'au moins deux lignes de niveau sont superposées sur l'image affichée dans chaque direction, les lignes de niveau sont déplacées de façon à couvrir la gamme de tolérances établie expérimentalement ($\Delta x$ et $\Delta y$) dans la position des valeurs limites inférieure et supérieure momentanées ($x_a—x_f$ et $y_a—y_f$) dans la direction existante.

3. Procédé tel que revendiqué dans la revendication 1 ou 2, caractérisé en ce que, dans le système de déviation de l'appareil d'affichage, l'une ou l'autre des déviations directionnelles est commandée directement au moyen d'un signal électrique proportionnel à la valeur momentanée du facteur indépendant correspondant.

4. Appareil pour la détermination de gammes de tolérances optimales sur la base d'une évaluation conjointe visuelle de paramètres de processus technologiques et de caractéristiques de produit, comprenant un microprocesseur, dont les dispositifs d'entrée sont pourvus d'entrées de données (Rk, Rijk, RA) adaptées à des sources de données (V1A, V2A ... VPA) ($e_1k$, $e_2k$ ... $e_nk$) fournissant lesdits paramètres technologiques et caractéristiques de produit, au moins une de ses sorties de signaux ($\Delta A'c$) étant reliée à une entrée de commande (c) de l'unité d'affichage à écran vidéo (110), caractérisé en ce que cette entrée de commande (c) est l'entrée de commande de brillance et/ou couleur du spot d'images et en ce que l'appareil comporte des générateurs électroniques ou mécaniques de lignes de niveau adaptés à la géométrie de l'image d'écran—avec orientation identique ou directions de déviation—ainsi qu'un dispositif de déplacement de lignes de niveau (103, 104) actionné par un dispositif de commande et dont la direction de mouvements est perpendiculaire à la ligne de niveau.

5. Appareil tel que revendiqué dans la revendication 4, caractérisé en ce qu'au moins deux autres sorties de signaux (XK, YK) du microprocesseur sont reliées directement ou indirectement à l'entrée (a, b) commandant l'une ou l'autre déviation directionnelle du système de déviation de l'unité d'affichage (110).

6. Appareil tel que revendiqué dans la revendication 4 ou 5, caractérisé en ce que le générateur de lignes de niveau est constitué par un ensemble de règles se composant d'au moins deux régles qui sont chacune reliées à au moins un support mobile, le support mobile étant disposé parallèlement à et en avant de l'écran vidéo et le dispositif de commande étant une poignée formée sur l'ensemble de règles, ou bien un dispositif fonctionnellement équivalent.

7. Appareil tel que revendiqué dans la revendication 4 ou 5, caractérisé en ce qu'il comporte une unité d'affichage à faisceaux multiples dans laquelle l'unité de commande d'un des faisceaux est couplée par une entrée de commande de brillance et/ou de couleurs à une des entrées de signaux du microprocesseur, tandis qu'un ou plusieurs autres dispositifs de commande de brillance de faisceaux sont des dispositifs actionnés manuellement et que d'autres dispositifs actionnés manuellement sont reliés à des unités commandant la déviation d'autres faisceaux dans l'une ou l'autre direction.

8. Appareil tel que revendiqué dans la revendication 7, caractérisé en ce qu'il est pourvu d'un autre faisceau, pour lequel des dispositifs d'actionnement manuels opérant dans un partage de temps différent sont reliés à chaque dispositif de commande de déviation de l'appareil.

9. Appareil tel que revendiqué dans l'une quelconque des revendications 4 à 8, caractérisé en ce que le microprocesseur est agencé et adapté pour traiter au moins deux caractéristiques de produits différentes, et le dispositif du microprocesseur (appelé dans la suite typotron) qui fournit les signaux électriques adaptés à l'entrée de commande correspondante de l'unité d'affichage représentant les valeurs momentanées de ces caractéristiques de produits est relié par l'intermédiaire de l'adapteur de multiplexage temporel à l'entrée (aux entrées) de commande de brillance et/ou de couleur de l'unité d'affichage, ledit adaptateur étant branché entre la sortie du typotron et une sortie de signal correspondante du microprocesseur, ou bien entre la sortie de signal correspondante du microprocesseur et l'entrée de commande de brillance et/ou de couleur.

0 067 534

Fig.1

Fig 2

0 067 534

Fig. 3a

Fig. 3b.

2

Fig. 4

Fig.5

Fig.6

Fig.7

Fig. 8

Fig.9

Fig. 10

0 067 534

Fig.11